# EUROPÄISCHE PATENTSCHRIFT

(11) **EP 0 644 323 B1**
(45) Veröffentlichungstag und Bekanntmachung des Hinweises auf die Patenterteilung: **10.12.1997**
(21) Anmeldenummer: 93115072.6
(22) Anmeldetag: 17.09.1993
(51) Int. Cl.: F02D 41/40, F02D 41/28

(54) **Vorrichtung zur Ermittlung eines Betriebszustandes einer Einspritzpumpe**
Device for detecting an operation condition of an injection pump
Dispositif de détection d'une condition de fonctionnement d'une pompe d'injection

(43) Veröffentlichungstag der Anmeldung: 22.03.1995
(73) Patentinhaber: SIEMENS AKTIENGESELLSCHAFT, 80333 München (DE)
(72) Erfinder: Weigl, Manfred, D-82348 Berg (DE)

(56) Entgegenhaltungen:
- EP-A- 0 481 912
- US-A- 4 884 549
- PATENT ABSTRACTS OF JAPAN vol. 7, no. 71 (M-202)24. März 1983 & JP-A-57 212 366 (HITACHI ZOZEN CORP.) 27. Dezember 1982
- PATENT ABSTRACTS OF JAPAN vol. 6, no. 83 (M-130)21. Mai 1982 & JP-A-57 020 553 (HITACHI ZOZEN CORP.) 3. Februar 1982
- PATENT ABSTRACTS OF JAPAN vol. 8, no. 165 (P-291)31. Juli 1984 & JP-A-59 061 742 (FUJI JUKOGYO KK) 9. April 1984
- PATENT ABSTRACTS OF JAPAN vol. 12, no. 409 (M-758)28. Oktober 1988 & JP-A-63 150 463 (HONDA MOTOR CO) 23. Juni 1988
- PATENT ABSTRACTS OF JAPAN vol. 14, no. 583 (M-1064)26. Dezember 1990 & JP-A-02 252 966 (DIESEL KIKI CO. LTD.) 11. Oktober 1990

## Beschreibung

Die Erfindung betrifft eine Vorrichtung zur Ermittlung zumindest eines tatsächlichen Betriebszustandes einer magnetventilgesteuerten Einspritzpumpe für Brennkraftmaschinen nach dem Oberbegriff des Patentanspruchs 1.

Für schnelllaufende Dieselbrennkraftmaschinen mit elektronischer Steuerung von Spritzbeginn und Menge werden zukünftig Einspritzpumpen mit einem zentralen elektronisch steuerbaren Ventil eingesetzt werden. Dabei laufen Kolben auf einem Nockenring oder einer Nockenscheibe oder -welle, durch welche Füllrampen und Förderrampen gebildet werden. Treffen die Kolben auf die Förderrampe in einem Zeitpunkt auf, der gleichzeitig Förderbeginn sein soll, so baut sich bei einem geschlossenen Magnetventil sofort ein hoher Druck auf, der den Beginn eines Einspritzvorgangs zur Folge hat.

Durch die EP-A-0 481 912 ist ein Pumpentyp bekannt, bei dem der Schließzeitpunkt für das Magnetventil nicht mit dem Förderbeginn der Pumpe übereinstimmt. Bei diesem Pumpentyp schweben die Nocken zwischen dem Schließzeitpunkt des Magnetventils und dem Förderbeginnzeitpunkt, ohne eine Rampe zu berühren, bis die Nocken nach und nach auf die Förderrampe auftreffen.

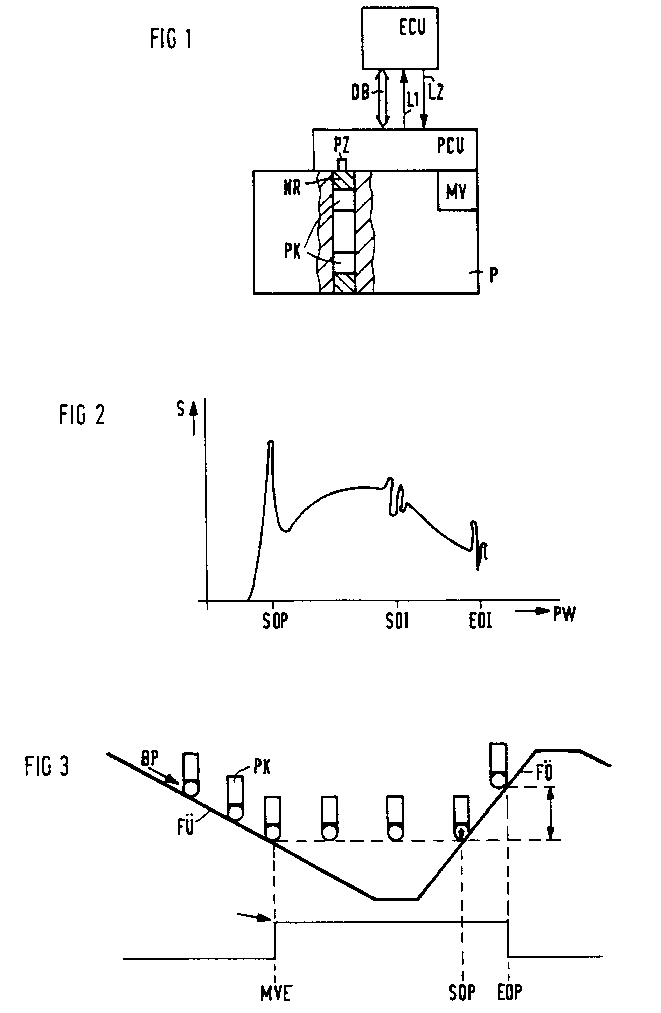

Dieses Pumpenprinzip (auch Fill-Spill-Modus genannt) soll nun anhand der Fig. 3 kurz erläutert werden. Die dick ausgezogene Linie zeigt abgewickelt die Pumpenkolbenbahn BP, auf der der Pumpenkolben PK läuft. Der linke Bereich der dick ausgezogenen Linie bildet die Füllrampe FÜ, der rechte Bereich die Förderrampe FÖ. Das Signal für das Magnetventil (Magnetventil nicht gezeigt) ist unterhalb der Bahn BP dargestellt. Im Zeitpunkt MVE schließt das Magnetventil. Da der Pumpenkolben jedoch weiterläuft, schwebt dieser eine gewisse Strecke, bis er auf die Förderrampe FÖ auftrifft. Da das Magnetventil bereits schon geschlossen ist, bildet dieser Auftreffpunkt der Förderbeginnzeitpunkt SOP. Die Kolben laufen nun entlang der Förderrampe, bis das Magnetventil zum Zeitpunkt EOP, dem Ende des Förderns, geöffnet wird. Durch die Zeitdifferenz zwischen SOP und EOP wird die einzuspritzende Kraftstoffmenge bestimmt. Der restliche Kraftstoff von EOP bis zum Maximalwert der Pumpenkolbenbahn wird durch das offene Ventil in das Pumpenvolumen zurückgefördert.

Der Förderbeginn wird also nicht durch eine elektronische Steuerung vorgegeben, sondern er wird durch Berechnungen, welche auf einer numerischen Beschreibung der Nockengeometrie basieren, ermittelt.

Zwischen der Berechnung und der Ansteuerung von MVE vergeht eine gewisse Zeit, in der sich der Förderbeginnzeitpunkt SOP geändert haben könnte und somit der genaue Förderbeginnzeitpunkt anders liegt. Weiter können Ungenauigkeiten in der Berechnung dazu führen, daß der Istwert des Förderbeginnzeitpunktes SOP nicht mit dem Sollwert übereinstimmt.

Dieses Problem ist bekannt. Zur Lösung dieses Problems schlägt die EP-A 0 481 912 einen geeigneten Sensor vor, wie er in der US-PS 4 884 549 näher beschrieben ist. Der Sensor ist hier als Drucksensor ausgebildet, der in der Leitung zwischen der Pumpe und einer Einspritzdüse angeordnet ist. Dazu muß die Hochdruckleitung aufgetrennt werden, um einen Sensor hier anzuordnen, was einen erhöhten Aufwand an die Druckfestigkeit und Druckdichtigkeit des Systems zur Folge hat. Bei einer Undichtigkeit fällt das System aus.

Aus JP-A 57 020 553 ist eine Anordnung bekannt, bei der an einer nockenbetriebenen Verteilereinspritzpumpe ein Körperschallgeber vorgesehen ist, dieser liefert elektrische Signale, aus denen sich Betriebszustände der Verteilereinspritzpumpe ermitteln lassen.

Aus JP-A 59 061 742 ist ein Verfahren zur Störungsüberprüfung bekannt, bei dem eine Einspritzpumpe periodisch eingeschaltet wird und das Betriebsgeräusch der Einspritzpumpe aufgezeichnet wird, ohne daß durch das Betriebsgeräusch die Störungsüberprüfung beeinflußt wird.

Aus JP-A 57 212 366 ist ein Verfahren zur Bestimmung eines Kraftstoffentladevorganges in Bezug auf einen Kurbelwellenwinkel bekannt, bei dem das Vibrationssignal oder das Geräuschsignal eines Sensors, der an der Einspritzpumpe angeordnet ist, ausgewertet wird, um den Entladezeitpunkt zu ermitteln.

Es ist Aufgabe der vorliegenden Erfindung, einen Sensor zur Ermittlung des Förderbeginns bei einer Radialkolbenpumpe so vorzusehen, daß kein Eingriff in das Hochdrucksystem erforderlich ist.

Diese Aufgabe wird gemäß der Erfindung durch den Patentanspruch 1 gelöst. Weiterbildungen sind in den Unteransprüchen gekennzeichnet.

Insbesondere beim Auftreffen eines Pumpenkolbens auf die Förderrampe entsteht aufgrund des plötzlichen hohen Druckaufbaus ein merkliches Geräusch. Durch das Vorsehen eines Körperschallgebers nach der Erfindung kann dieses Geräusch detektiert werden, ohne in das eigentliche Drucksystem eingreifen zu müssen. Es können daher zusätzliche Druckleitungen usw. entfallen, so daß die Betriebssicherheit nicht zusätzlich beeinträchtigt wird. Damit können in einfacher Weise der tatsächliche Förderbeginn, der Einspritzbeginn und das Ende der Einspritzung mit einem einzigen Geber ermittelt werden.

Der Körperschallgeber kann in vorteilhafter Weise als Piezogeber ausgebildet sein. Ein solcher Geber besteht grundsätzlich aus einem Wandlerelement, das in Form einer Platte ausgebildet sein kann, auf der ein piezokeramisches Element angeordnet ist. Aufgrund des Geräusches beispielsweise beim Auftreffen eines Pumpenkolbens auf die Förderrampe wird diese Platte ausgelenkt, wodurch eine elektrische Spannung in der Piezokeramik erzeugt wird, die in einer Elektronik ausgewertet wird.

Es sind nun zwei Figuren zur Erläuterung der Erfindung vorgesehen. Die dritte Figur ist bereits eingangs erläutert worden und zeigt ein Pumpenprinzip.

Es zeigen:
Figur 1 den prinzipiellen Aufbau des Ansteuersystems für eine Pumpe in Form eines Blockschaltbildes in vereinfachter, schematischer Darstellung,
Figur 2 eine graphische Darstellung eines typischen Verlaufs eines detektierten Signals, und
Figur 3 das eingangs erwähnte Pumpenprinzip.

In Figur 1 ist eine Pumpe P angedeutet, bei der Antriebsmittel (nicht gezeigt) die Pumpenkolben PK antreiben. Dabei läuft ein Pumpenkolben PK, wie in Figur 3 angedeutet, auf einer Pumpenkolbenbahn BP, die durch einen Nockenring NR gebildet ist. Unmittelbar auf der Pumpe P ist die Steuereinrichtung PCU für die Pumpe P angeordnet. Die Steuereinrichtung PCU steht mit einer Motorsteuereinrichtung ECU über einen Datenbus DB und weiteren Leitungen L1,L2 sowie mit einem Magnetventil MV in Verbindung. Unmittelbar auf dem Nockenring NR ist ein Piezogeber PZ angeordnet, der das Auftreffen der Pumpenkolben auf die Förderrampe FÖ detektiert, wobei die detektierte Information in der Pumpensteuereinrichtung PCU ausgewertet wird. Bei einer Abweichung des Istwertes des Förderbeginnzeitpunkts SOP vom Sollwert kann in der Pumpensteuereinrichtung PCU eine entsprechende Korrektur für den nächsten Förderbeginn vorgenommen werden.

Eine graphische Darstellung eines typischen vom Körperschallgeber ermittelten Signalverlaufs ist in Figur 2 gezeigt. Hier ist die Schallamplitude S in Abhängigkeit vom Pumpenwellenwinkel PW bzw. der Zeit aufgetragen. Im Förderbeginnzeitpunkt SOP schlägt ein Pumpenkolben PK auf die Förderrampe FÖ auf. Es entsteht ein starkes Geräusch, das eine steile große Schallamplitude zur Folge hat. Nach Erreichen eines bestimmten Drucks öffnet eine Einspritzdüse (nicht gezeigt), d.h. es ist Einspritzbeginn SOI. Dieser Zeitpunkt äußert sich in kleineren Druckschwankungen, wie in Figur 2 angedeutet ist. Beim Öffnen des Magnetventils MV entsteht eine weitere Schalldruckschwankung, die für den Zeitpunkt des Förderendes EOI charakteristisch ist. Alle diese Signale können in der PCU nacheinander ausgewertet werden, so daß die exakten wirklichen Betriebszustände von SOP, SOI und EOI leicht ermittelbar sind.

Die Erfindung ist natürlich auch auf einen Pumpentyp anwendbar, bei dem der Zeitpunkt des Förderbeginns SOP mit dem Schließzeitpunkt des Magnetventils übereinstimmt. Da bei diesem Pumpentyp durch das Schließen des Magnetventils sofort ein hoher Druckaufbau verursacht wird, welcher wiederum den Schließvorgang behindert, ist gerade bei diesem Pumpentyp trotz der Detektion des Ventilschließzeitpunktes über den Stromverlauf unter Umständen eine relativ hohe Unsicherheit über den tatsächlichen Förderbeginn SOP gegeben, was ein Vorsehen eines Körperschallgebers sinnvoll machen kann.

## Patentansprüche

1. Vorrichtung zur Ermittlung zumindest eines tatsächlichen Betriebszustandes einer ventilgesteuerten Einspritzpumpe für Brennkraftmaschinen, insbesondere Dieselbrennkraftmaschinen, wobei Pumpenkolben vorgesehen sind, die auf einer Füllrampe und auf einer Förderrampe eines Nockenringes, einer Nockenscheibe oder einer Nockenwelle laufen, wobei der Förderbeginn vom Schließzeitpunkt eines Magnetventils abhängig ist, **dadurch gekennzeichnet,** daß der tatsächliche Förderbeginn (SOP) beim Auftreffen eines Pumpenkolbens (PK) auf die Förderrampe (FÖ) durch einen Körperschallgeber (PZ) ermittelt wird.

2. Vorrichtung nach Anspruch 1, **dadurch gekennzeichnet,** daß der Körperschallgeber (PZ) ein Piezogeber ist.

3. Vorrichtung nach Anspruch 1, **dadurch gekennzeichnet,** daß der Körperschallgeber (PZ) im Bereich des Nockenrings (NR) angeordnet ist.

4. Vorrichtung nach Anspruch 1, **dadurch gekennzeichnet,** daß der Körperschallgeber im Bereich des Drehzahlgebers der Pumpe angeordnet ist.

5. Vorrichtung nach Anspruch 1, **dadurch gekennzeichnet,** daß der Körperschallgeber in einer auf der Pumpe angeordneten Elektronik so angeordnet ist, daß er einen Teil des Pumpengehäuses kontaktiert.

6. Vorrichtung nach Anspruch 1, **dadurch gekennzeichnet,** daß die Information des Körperschallgebers in einer Pumpensteuerung (PCU) ausgewertet wird.

## Claims

1. Device for determining at least one actual operating condition of a valve-controlled injection pump for internal combustion engines, in particular diesel internal combustion engines, pump pistons being provided which run on a filling ramp and on a delivery ramp of a cam ring, a cam plate or a camshaft, the start of delivery being dependent upon the closing instant of a solenoid valve, characterized in that the actual start of delivery (SOP) is determined by a structure-borne-noise transducer (PZ) when a pump piston (PK) strikes the delivery ramp (FÖ).

2. Device according to Claim 1, characterized in that the structure-borne-noise transducer (PZ) is a piezoelectric transducer.

3. Device according to Claim 1, characterized in that the structure-borne-noise transducer (PZ) is arranged in the region of the cam ring (NR).

4. Device according to Claim 1, characterized in that the structure-borne-noise transducer is arranged in the region of the tacho-generator of the pump.

5. Device according to Claim 1, characterized in that the structure-borne-noise transducer is arranged in an electronic system, arranged on the pump, in such a way that it contacts a part of the pump housing.

6. Device according to Claim 1, characterized in that the information from the structure-borne-noise transducer is analyzed in a pump control unit (PCU).

## Revendications

1. Dispositif de détermination d'au moins un état de fonctionnement réel d'une pompe d'injection, commandée par vanne, pour des moteurs à combustion interne, notamment des moteurs à combustion interne Diesel, dans lequel il est prévu des pistons de pompe, qui vont sur une rampe de remplissage et sur une rampe de transport d'un anneau à cames, d'un disque à cames ou d'un arbre à cames, le début du transport dépendant de l'instant de fermeture d'une vanne magnétique,
caractérisé en ce que le début (SOP) effectif du transport est déterminé par un détecteur (PZ) de bruit de corps lors de l'impact d'un piston (PK) de pompe sur la rampe (FÖ) de transport.

2. Dispositif suivant la revendication 1, caractérisé en ce que le détecteur (PZ) de bruit de corps est un détecteur piézoélectrique.

3. Dispositif suivant la revendication 1, caractérisé en ce que le détecteur (PZ) de bruit de corps est monté dans la zone de l'anneau (NR) à cames.

4. Dispositif suivant la revendication 1, caractérisé en ce que le détecteur de bruit de corps est monté dans la zone de l'indicateur de vitesse de rotation de la pompe.

5. Dispositif suivant la revendication 1, caractérisé en ce que le détecteur de bruit de corps est monté dans un dispositif électronique monté sur la pompe, de telle sorte qu'il soit en contact avec une partie du corps de la pompe.

6. Dispositif suivant la revendication 1, caractérisé en ce que l'information du détecteur de bruit de corps est exploitée dans une commande (PCU) de pompe.
